(19) **Europäisches Patentamt / European Patent Office / Office européen des brevets**

(11) **EP 1 671 508 B1**

(12) **EUROPEAN PATENT SPECIFICATION**

(45) Date of publication and mention of the grant of the patent:
**30.05.2007 Bulletin 2007/22**

(51) Int Cl.:
***H04Q 7/36*** (2006.01)

(21) Application number: **04766509.6**

(22) Date of filing: **16.08.2004**

(86) International application number:
**PCT/EP2004/051808**

(87) International publication number:
**WO 2005/032190 (07.04.2005 Gazette 2005/14)**

(54) **A method of determining the identity of an unknown neighbor cell and apparatus therefor**

Verfahren zur Bestimmung der Identität einer unbekannten Nachbarzelle und Vorrichtung dafür

Prodédé pour déterminer l'identité d'une cellule voisine inconnue et appareil à cet effet

(84) Designated Contracting States:
**AT BE BG CH CY CZ DE DK EE ES FI FR GB GR HU IE IT LI LU MC NL PL PT RO SE SI SK TR**

(30) Priority: **27.09.2003 GB 0322724**

(43) Date of publication of application:
**21.06.2006 Bulletin 2006/25**

(73) Proprietor: **MOTOROLA, INC.**
**Schaumburg, IL 60196 (US)**

(72) Inventors:
- **RATFORD, Michael**
  **Swindon SN12NT (GB)**
- **BRUSCH, Simon**
  **Faringdon Oxfordshire SN7 7UT (GB)**
- **MATHEWS, John**
  **Swindon Wiltshire SN5 6NF (GB)**
- **RAMSDEN, Jason**
  **Swindon Wiltshire SN5 5DE (GB)**
- **O'SHAUGHNESSY, Donal**
  **County Cork, Ireland (IE)**
- **BERMINGHAM, Peter**
  **County Cork (IE)**

(74) Representative: **Jepsen, René Pihl**
**Eltima Consulting**
**Grove House, Lutyens Close'**
**Chineham Court**
**Basingstoke, Hants RG24 8AG (GB)**

(56) References cited:
**US-B1- 6 556 829**

**Description**

The present invention relates to a method of determining the identity of an unknown neighbor cell of a serving cell in a cellular communication network, and an apparatus therefor.

In a cellular communication system, the area over which the service is provided is divided into a number of smaller areas called cells. Each cell is served by a base station that provides communication services to user devices, such as mobile telephones, within the cell. Examples of existing or proposed cellular communication systems are the Global System for Mobile communication (GSM system), the Terrestrial Trunked Radio system (TETRA system), Motorola™'s integrated digitally enhanced network (iDEN™), the Universal Mobile Telecommunication System (UMTS) currently under standardization, the IS-95 system and the CDMAOne system.

As the user device moves within the total area covered by a cellular communication system, the user device is served by a succession of base stations as the user device travels between the respective cells. The transition between one serving base station and another is termed handover or handoff and generally occurs when it is judged that the user device would be better served by the new base station than the serving base station. This decision is usually based on a comparison of the signal strength from the new base station and the signal strength from the serving base station. A number of handover algorithms will be known to a skilled person, and are not relevant to the invention and so will not be described in any further detail.

The frequency spectrum available to the operator is assigned in a frequency plan to the different cells so as to provide coverage across the entire area covered by the communication system. Each frequency channel may be re-used several times in geographical diverse parts of the communication system. However, since the requirement for handover of a user device between cells requires that adjacent cells overlap to some extent, the same frequency channel, or more generally frequency channels causing co-channel interference, should not be used in adjacent (or potentially interfering) cells.

The allocation of the available frequency channels to the different cells in the frequency plan has a considerable impact on the capacity of the overall communication system and on the quality of the communication system perceived by the user. In particular, an optimized frequency plan will allow a higher capacity to be achieved with the existing infrastructure, thus reducing or delaying the need to add extra cells to provide an increase in capacity. In addition, since optimization of the frequency plan will reduce the number of potentially interfering frequency channels, the interference and/or number of dropped calls experienced by the user will be reduced, leading to a perception of improved quality.

Periodically the operator may expand the network, by adding a new cell or new base site to the cellular communication system or the construction of a new building or a new road may alter the radio propagation environment or the subscriber behavior. Additionally or alternatively there may be a change in subscriber numbers or behavior, or subscriber complaints about the service received in a particular part of the network, or there might be a fall-off in network performance, as determined by statistical monitoring of the network. More recently, a need to increase the data throughput of the radio network, arising because a bad quality transmission requires retransmission of data, unlike voice, thus lowering the net throughput of the network, may become apparent. In these situations, the existing frequency plan must be modified to take account of the new situation. Additionally or alternatively, a network operator may modify the existing frequency plan as part of the operator standard operating procedures, in order to maintain network quality.

Thus periodically, it is highly advantageous for the operator of the communication system to optimize the frequency plan by re-allocating the frequency channels to the cells. The process of optimizing the frequency plan by re-allocating the frequency channels to the cells is called frequency re-planning.

In a cellular communication system, each cell has a list of other cells that may serve as candidate handover cells. This list of cells is typically called a current neighbor list. For a given cell, the neighbor list cells are in general chosen from those located in closed geographical proximity to the cell. However, owing to factors such as geographical or construction features e.g. obstructions, subscriber densities, subscriber movement patterns and uneven sized or shaped cells, in practice it is necessary to select candidate handover cells for the neighbor list in a less systematic manner.

In a given cellular communication system, there will typically be a maximum number of cells that the neighbor list of a cell can contain. In the GSM system, this maximum number is 32.

In order to determine when to handover a user device to another base station, a serving base station asks the user device to scan frequencies used by neighboring cells and to report to the base station on the received signal levels. For example in the GSM system, the user device periodically sends to its serving base station a measurement report containing information related to the cell identity of the six received signals with the highest received signal level.

It is known to use information from measurement reports of user devices in a cellular communication system in a frequency re-planning process for the cellular communication system.

When the cell identities information in the measurement report corresponds with cells in the base station neighbor list, the base station is able to establish the identity of the neighboring cells in a trivial manner. However, in some cases, at least one of the six received signals with the highest received signal is received from a cell that is not on the base station neighbor list. These cells are termed unknown neighbors. The patent US 6556829 shows a method for identifying neighbors.

The presence of unknown neighbors means that not all of the information required to optimize the network is available, resulting in a sub-optimum frequency plan and increased interference in the network. Therefore there exists a need to provide a method of identifying unknown neighbors in a cellular communication network. The identification of unknown neighbors allows a more accurate frequency re-planning operation resulting in increased quality of service and reduced interference in the cellular communication network.

In accordance with a first aspect of the present invention there is provided a method of determining the identity of an unknown neighbor cell of a serving cell in a cellular communication system, the unknown neighbor cell being identified from measurement report information supplied by a communication device associated with the serving cell, comprising the step of using neighbor list information of at least one other cell of the cellular communication network.

In accordance with a second aspect of the present invention, there is provided a storage medium storing processor-implementable instructions for controlling a processor to carry out the method of the invention.

In accordance with a third aspect of the present invention, there is provided an apparatus for determining an unknown neighbor cell in a cellular communication system, comprising means for establishing information relating to the unknown neighbor cell from measurement report information supplied by a communication device associated with the serving cell; and means for establishing the identity of the unknown neighbor using neighbor list information of at least one other cell of the cellular communication network.

For a better understanding of the present invention, and to show how it may be brought into effect, reference will now be made, by way of example, to the accompanying drawings in which:

Figure 1 is a schematic diagram of the inter-relationship between network elements of a cellular communication system in which an embodiment may be implemented;
Figure 2 shows a serving cell and two potential unknown neighbors in an exemplary cellular communication network;
Figure 3 is a flow chart illustrating an exemplary method in accordance with a first embodiment;
Figure 4 shows partial neighbor lists for a serving cell and two neighbor cells;
Figure 5 is a flow chart illustrating an exemplary method in accordance with a second embodiment;
Figure 6 shows a measurement report for a serving cell and a partial neighbor list for two neighbor cells;
Figure 7 is a flow chart illustrating an exemplary method in accordance with a third embodiment;

Figure 8 is a flow chart illustrating an exemplary method in accordance with a fourth embodiment;
Figure 9 is a flowchart illustrating the Kamada-Kawai algorithm as an exemplary spring-layout algorithm; and
Figure 10 illustrates an exemplary virtual map.

The present invention will now be described with reference to the operation of a GSM system. However, as will be apparent to a skilled person, the invention is applicable to any cellular communication system.

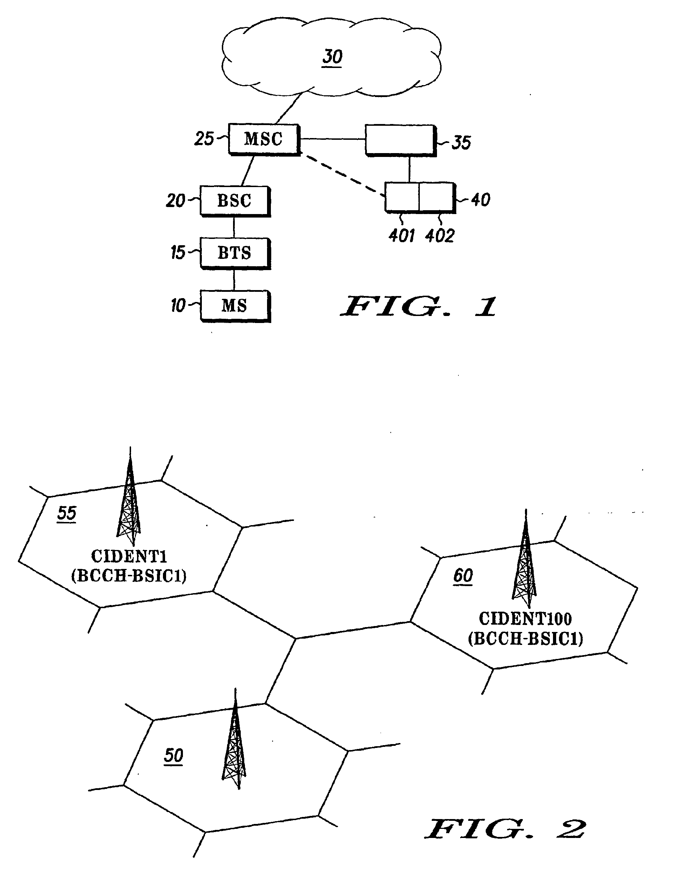

Figure 1 is a schematic diagram of the interrelationship between network elements of a cellular communication network in which an embodiment may be implemented.

As indicated previously, a mobile station (MS) 10 is able to move within the coverage area of the cellular communication system receiving communication services from a plurality of base transceiver stations (BTS), each serving a cell covering a portion of the total coverage area of the cellular communication system. At any one time while the MS 10 is switched on, the MS 10 is in radio communication contact with its serving BTS 15 and may be exchanging control or signaling information with BTS 15 when the MS10 is in an idle state, and may be exchanging speech or data traffic information along with control or signaling information with BTS 15 in an active state.

The BTS 15 is coupled to a base station controller (BSC) 20 that controls the operation of the BTS 15, and typically also controls the operation of a number of other BTSs of the cellular communication system (not shown for clarity). The BSC 20 in turn is coupled to a Mobile Switching Center (MSC) 25. The MSC is coupled to an external network 30, such as the public switched telephone network PSTN and is also coupled to other MSCs of the cellular communication network (not shown for clarity). The MSC 25 routes speech or data traffic information from or to the MS 10 and to or from other MSCs to which it is connected and/or the external network 30. Typically the MSC 25 will also be coupled to a number of other BSCs/BTSs.

The MSC 25 is also operably connected to an Operations and Maintenance Centre (OMC) 35. The function of the OMC 35 is to monitor and control the operation of the cellular communication network. In particular, the OMC may store the cell frequencies and neighbor data for the cells of the network.

The network elements illustrated in Figure 1 and as described above are conventional network elements of a GSM network. It will be clear to a skilled person that additional network elements would be present in an actual network. These additional elements are not relevant to the present invention and have therefore been omitted for clarity.

However, the invention is not intended to be limited to a GSM network, as illustrated and a network incorporating additional or alternative network elements such as network elements for supporting packet data transfer, for example in accordance with the General Packet Radio System (GPRS) and/or network elements in accordance with third generation communication systems such as the Universal Mobile Communication System (UMTS) being standardized by the Third Generation Partnership Project (3GPP) of the European Telecommunication Standards Institute (ETSI) or CDMAOne, may utilize the principles of the invention

A network optimizer 40 is also provided in the embodiment shown in Figure 1, shown as operably coupled to the OMC. The network optimizer 40 includes a data collection function module 401, which preferably comprises a data storage function module (not shown), and a data analysis function module 402. The data collection function module 401 and the data analysis function module 402 are able to gather and/or to access information stored in the OMC, in particular cell frequencies and neighbor lists.

It will be recognized by a skilled person that the network optimizer 40 may be provided as part of the OMC function, or in a separate device, for example a separate device operably coupled to a switching center (MSC 25) or may be distributed between different network elements. In particular, it is not necessary for the data collection function module 401 and the data analysis function module 402 to be located within the same device or network element. As such the network optimizer 40 may be provided by a separate device of the cellular communication system or by a new OMC in the cellular communication system or the network optimizer 40 function may be provided as a software upgrade to an existing OMC or any other network device of the cellular communication system. Furthermore, at least the data analysis function module 402 may be able to be decoupled from the network, and thus may be coupled to the network only for the purposes of analysing the information collected by the data collection function module 401. At least the data collection function module 401 may advantageously be incorporated in the OMC 35.

The network optimizer 40 in accordance with the invention is preferably implemented as processor-implementable instructions stored on any storage media, for example but not limited to: floppy disk, hard disk, Read Only Memory (ROM), Programmable Read Only Memory (PROM), Erasable Programmable Read Only Memory (EPROM), Random Access Memory (RAM) and such like.

As mentioned previously, a MS 10 periodically measures the signal strength of the signals received from its serving BTS 15 and from neighboring cells (not shown for clarity) and sends a measurement report containing cell identity information to the serving base station. The measurement reports are sent to the BSC and are used to determine whether to handover the mobile station to a neighboring cell, as is conventional.

In the embodiment shown in Figure 1, the measurement reports are additionally collected by the data collection function 401 of the network optimizer 40, for analysis by the data analysis function 402. The data analysis function 402 of the network optimizer 40 carries out a frequency re-planning operation for all or part of the cellular communication network based on measurement reports from a plurality of MS collected by the data collection function 401.

In the GSM system, the mobile station scans frequencies on which it expects to find a Broadcast Control Channel (BCCH) being broadcast in neighboring cells.

Once a BCCH is detected, the BSIC is obtained from the received BCCH. The measurement report provided by the mobile station to the base station does not directly provide cell identity information. Instead, the measurement report contains the BCCH-BSIC pair information for the six highest signal strength signals received by the mobile station.

Typically in a GSM system, there are on average 15-20 BCCH frequency channels allocated within the system. Furthermore, in a GSM system, typically there may be between 8 and 64 available values for the BSIC. Clearly, therefore, in a reasonably sized GSM network having many thousands of different cells, the BCCH-BSIC pairing of an unknown neighbor will not be unique.

In order effectively to carry out a frequency re-plan, it is necessary to resolve the unknown neighbor identity. For each unknown neighbor identified by a BCCH-BSIC pair there is a set of candidate solutions, i.e. those cells in the cellular communication network with matching BCCH-BSIC values. The unknown neighbor can be identified from this set of candidates by estimating from which of the candidate cells a radio signal is most likely to have been received by a MS in the serving cell in question.

Figure 2 shows a serving cell 50 of an exemplary cellular communication network. A MS (not shown) in the serving cell 50 has just sent a measurement report containing an unknown BCCH-BSIC pairing to the serving cell 50 e.g. BCCH-BSIC1. As explained above, in the GSM system of the exemplary embodiment, the unknown BCCH-BSIC pairing corresponds to a particular unknown cell identity. The measurement report is collected inter alia by the data collection function module 401 of the network optimizer 40 for analysis by the data analysis function module 402 of the network optimizer 40, as explained above.

The data analysis function module 402 must resolve the unknown neighbor by identifying candidate cells of the cellular communication network having the same cell identity information e.g. BCCH-BSIC1 (i.e. the same BCCH-BSIC combination, in the exemplary GSM communication network). The candidate cell information may be obtained from OMC 35, which typically maintains information on cell identities in the cellular communication network. Two such candidate cells 55 and 60, each of which has the same cell identity information e.g.

BCCH-BSIC1 (i.e. the specific BCCH-BSIC combination, in the exemplary GSM communication network) are shown in Figure 2.

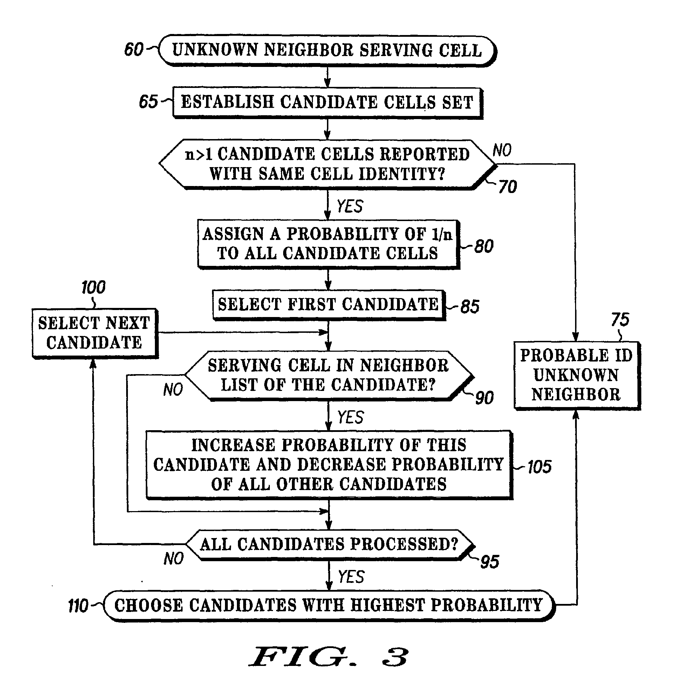

A method of resolving the unknown neighbor identity in accordance with a first embodiment will now be described, with reference to Figure 3.

Once the candidate cells 55,60 have been identified, the neighbor lists of the candidate cells are examined to determine whether the serving cell appears in the neighbor list of any of the candidate cells. The neighbor lists of all cells may be obtained from OMC 35, which typically maintains information of the current neighbor list for each cell in the cellular communication network. Alternatively this information may be stored in another network element in other communication system arrangements.

If the serving cell 50 is in the neighbor list of a candidate cell, it may be inferred that the candidate cell is a reasonably close neighbor, at least in radio propagation terms even if not in geographical terms. Thus it can be inferred that such a candidate cell is more likely to be the unknown neighbor than a candidate cell whose neighbor list does not contain the serving cell.

In the arrangement of Figure 2 it is determined that serving cell 50 is in the neighbor list of candidate cell 60, but is not in the neighbor list of candidate cell 55. Therefore, the data analysis function module 402 resolves the unknown neighbor to be candidate cell 60.

Figure 3 is a flow chart setting out an exemplary method in accordance with a first embodiment.

Firstly, starting at step 60, for an unknown neighbor in a measurement report relating to a MS in serving cell 50, the data analysis function module 402 establishes the set of candidate cells for consideration as the unknown neighbor 65 i.e. the cells having the same cell identity (BCCH-BSIC) as the unknown neighbor. As indicated above, information on cell identities may generally be obtained from the OMC 35.

If only one candidate cell having the same cell identity (BCCH-BSIC) is identified, step 70-n, it is trivial to establish the identity of the unknown neighbor, step 75. However, generally more than one candidate cell is identified, step 70-y, and so in this embodiment the data analysis function module 402 proceeds to assign an equal probability to all candidate cells, step 80.

Next a first candidate cell is selected from the set of candidate cells, step 85, and the data analysis function module 402 establishes whether the serving cell 50 is in the neighbor list of the candidate cell, step 90. As indicated above, the data analysis function module 402 may obtain this information from the OMC 35.

If the serving cell 50 is not in the neighbor list of the selected candidate cell, step 90-n, the data analysis function module 402 checks, in step 95, whether all the candidate cells have been processed. If not, step 95-n, the next candidate is selected step 100 and the data analysis function module 402 establishes whether the serving cell 50 is in the neighbor list of the new candidate cell, step 90

If the serving cell 50 is in the neighbor list of a selected candidate cell, step 90-y, the data analysis function module 402 increases the probability assigned to the selected candidate cell relative to the probability assigned to the remaining candidate cells in step 105. One way to achieve this alteration in the probability assigned to the different cells is to increase the probability assigned to the selected cell by $1/n$ (where n is the number of candidate cells) and to decrease the probability assigned to all other candidate cells by $1/(n^2-n)$. This algorithm maintains the sum of the probabilities assigned to the candidate cells equal to 1. However, it should be noted that this is not strictly necessary, and all that is required is to increase the probability assigned to each cell having the serving cell 50 in its neighbor list relative to the remaining selected cells.

Once the probabilities have been adjusted in step 105, the data analysis function module 402 checks, in step 95, whether all the candidate cells have been processed. If not, step 95-n, the next candidate is selected step 100. If all candidates have been processed, step 95-y, the data analysis function module 402 selects the candidate with the highest probability, step 110, to establish the probable identification of the unknown neighbor, step 75.

Clearly, the above described method in accordance with a first embodiment is most effective when only one of the candidate cells has the serving cell 50 in its neighbor list. Should more than one candidate cell have the serving cell 50 in its neighbor list, the unknown neighbor must be resolved using additional information or techniques. Specifically, other factors which may be used to alter the probability assigned to a particular candidate cell are for example: if the serving cell and a candidate cell share the same location area code (LAC), the probability assigned to the candidate cell is increased relative to the other candidate cells; if the serving cell and a candidate cell are under the same base station controller (BSS), the probability assigned to the candidate cell is increased relative to the other candidate cells; if the serving cell and a candidate cell are located at the same site, the probability assigned to the candidate cell is increased relative to the other candidate cells. It should be noted that the various increases indicated above are not necessarily of the same magnitude.

Additionally or alternatively, the method described above in relation to the first embodiment may be combined with one or more of the methods described below in connection with the second to fourth embodiments.

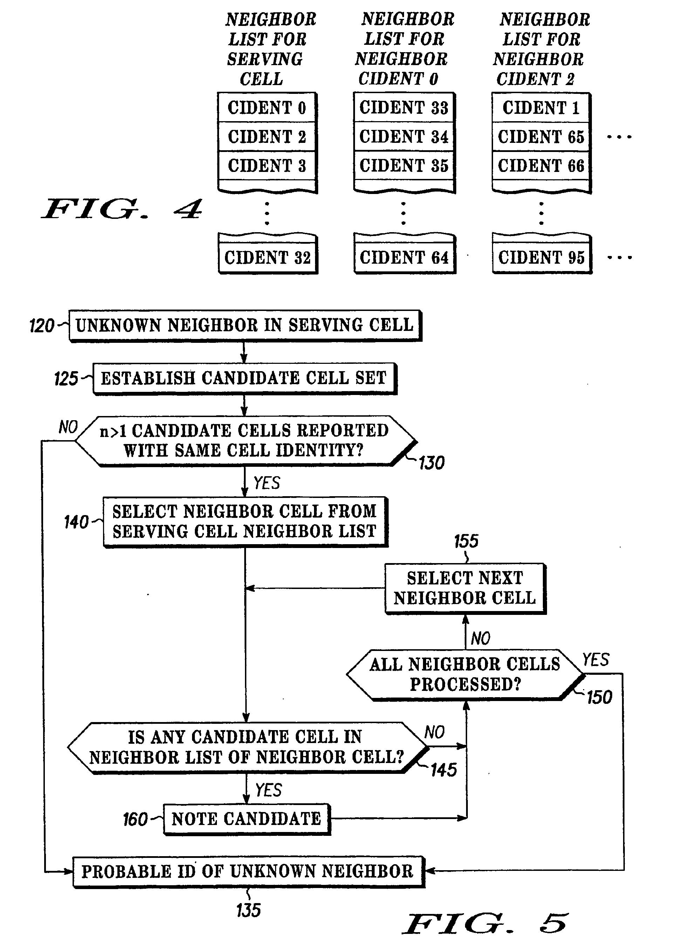

A method in accordance with a second embodiment will now be described with reference to Figures 4 and 5. In accordance with this method, the neighbor lists of the serving cell's neighbors are examined to determine whether any of the candidate neighbor cells are found in the neighbor lists of the cells in the neighbor list of the serving cell. If a candidate cell is found by this method, it may be assumed to be the correct cell since a neighbor cell of a neighbor cell is more likely to be adjacent to the serving cell, in a radio propagation sense, and thus to result in the strong signal reported in the measurement report, than a candidate cell that is not a neighbor of a neighbor.

Figure 4 shows partial neighbor lists for the serving cell 50 and two of the neighbor cells on the neighbor list of the serving cell. As indicated above, the neighbor list information may typically be stored by the OMC 35 in addition to the BSC 20 corresponding to the BTS 15 of the serving cell. In the exemplary illustrated embodiment the neighbor list contains 32 neighbor cells, as is conventional in accordance with the GSM standard: however, clearly the neighbor list may contain more or fewer neighbors in alternative arrangements of the invention.

The neighbor list for the serving cell identifies cells Cident0 and Cident2-Cident32 as neighbor cells. The neighbor list for the neighbor cell Cident0 identifies cells Cident33-Cident62 as neighbor cells. The neighbor list for the neighbor cell Cident2 identifies cells Cident1 and Cident65-Cident95 as neighbor cells. The neighbor lists for the remaining neighbor cells on the neighbor list of the serving cell have been omitted for clarity. In addition, it should be noted that for simplicity the cell identities Cident0-Cident95 are consecutive: clearly in practice this will not necessarily be the case.

Figure 5 is a flow chart illustrating a method in accordance with the second embodiment.

Firstly, starting at step 120, for an unknown neighbor (eg BCCH-BSIC1) in a measurement report relating to a MS in serving cell 50, the data analysis function module 402 establishes in step 125 the set of candidate cells for consideration as the unknown neighbor i.e. the cells having the same cell identity information BCCH-BSIC1 as the unknown neighbor. As indicated above, information on cell identities may generally be obtained from the OMC 35.

If only one candidate cell having the same cell identity information BCCH-BSIC1 is identified, step 130-n, it is trivial to establish the identity of the unknown neighbor, step 135. However, generally more than one candidate cell is identified for example, candidate cell Cident1 and Cident100, step 130-y.

Next the data analysis function module 402 obtains the serving cell neighbor list, for example from the OMC 35 as indicated above, and a first neighbor cell e.g. neighbor Cident0 is selected from the neighbor cell list, step 140. The data analysis function module 402 establishes whether any of the candidate cells e.g. Cident1 and Cident100 is in the neighbor list of the selected neighbor cell, step 145. As indicated above, the data analysis function module 402 may obtain neighbor list information from the OMC 35.

As explained above, neither candidate cell Cident1 or Cident100 is in the neighbor list of the selected neighbor cell Cident0. If the none of the candidate cells is in the neighbor list of the selected neighbor cell, step 145-n, the data analysis function module 402 checks, in step 150, whether all the neighbor cells have been processed, e.g. whether all candidate cells have been compared with the neighbor list of all neighbor cells of the serving cell. If not, step 150-n, the next neighbor cell is selected, step 155 and the data analysis function module 402 establishes whether any of the candidate cells is in the neighbor list of the newly selected neighbor cell, step 145.

Thus the next neighbor cell Cident2 is selected and the data analysis function module 402 determines whether either of the selected candidate cells Cident1 or Cident100 is in the neighbor list of neighbor cell Cident2, step 145. In this case, it is determined that candidate cell Cident1 is contained in the neighbor list of neighbor cell Cident2

If a candidate cell is in the neighbor list of a the neighbor cell, step 145-y, as indicated above, the data analysis function module 402 notes the identified candidate cell e.g. Cident1 in step 160. Since more than one candidate cell may be identified in the neighbor lists of the serving cell's neighbor cells, the data analysis function module 402 then checks, in step 150, whether all the neighbor cells have been processed. If not, step 150-n, the next neighbor cell is selected step 155. If all neighbor cells have been processed, step 150-y, the data analysis function module 402 establish the probable identification of the unknown neighbor as the or one of the candidate cells identified in step 160.

If no candidate cell has been identified by the above method, an additional stage in which the neighbor lists for the neighbor cells are checked for candidate cells may be employed. This stage may be repeated until at least one candidate cell is found.

If only one candidate cell has been identified, this candidate may be assumed to be the unknown neighbor.

Should more than one candidate cell be identified, the unknown neighbor must be resolved using additional information or techniques. Specifically, other factors which may be used to select a particular candidate cell are for example: if the serving cell and a candidate cell share the same location area code (LAC); if the serving cell and a candidate cell are under the same base station controller (BSS); if the serving cell and a candidate cell are located at the same site.

Additionally or alternatively, the second embodiment described above may be combined with one or more of the methods described herein in connection with the first, third and fourth embodiments.

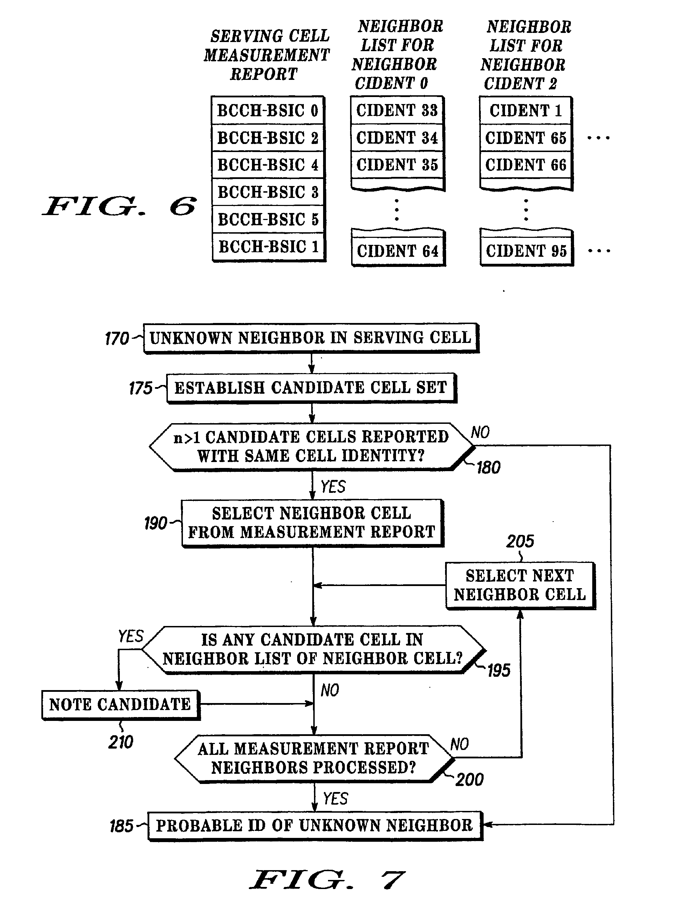

A method in accordance with a third embodiment will now be described with reference to Figures 6 and 7. In accordance with this method, the neighbor lists of cells identified in the serving cell measurement report are examined to determine whether any of the candidate neighbor cells are found in the neighbor lists of the cells identified in the measurement report. If a candidate cell is found by this method, it may be assumed to be the correct cell since a neighbor cell of a cell identified in the measurement report is more likely to be adjacent to the serving cell, in a radio propagation sense, and thus to result in the strong signal reported in the measurement report, than other candidate cells.

Figure 6 shows a measurement report for the serving cell 50 and a partial neighbor list of two of the neighbor cells identified in the measurement report. The neighbor lists for the remaining neighbor cells identified in the measurement report have been omitted for clarity. As indicated above, the neighbor list information may typically be stored by the OMC 35 in addition to the BSC 20 corresponding to the BTS 15 of the serving cell. In the exemplary illustrated embodiment the neighbor list contains 32 neighbor cells, as is conventional in accordance with the GSM standard: however, clearly the neighbor list may contain more or fewer neighbors in alternative arrangements of the invention. In addition, in the exemplary illustrated embodiment the measurement report contains cell identity information (e.g. BCCH-BSIC pairings) relating to the six strongest measured signals, as is conventional in accordance with the GSM standard: however, clearly the measurement report may contain more or fewer cell identity information in alternative arrangements of the invention.

The measurement report for the serving cell contains BCCH-BSIC pairings BCCH-BSIC0 to BCCH-BSIC5. BCCH-BSIC0 and BCCH-BSIC2 to BCCH-BSIC5 correspond to neighbor cells Cident0 and Cident2-Cident5 on the neighbor list of the serving cell, and can therefore be identified relatively easily. However BCCH-BSIC1 does not correspond to a neighbor cell on the neighbor list of the serving cell, and therefore represents an unknown neighbor.

The neighbor list for the neighbor cell Cident0 identifies cells Cident33-Cident64 as neighbor cells. The neighbor list for the neighbor cell Cident2 identifies cells Cident1 and Cident65-Cident95 as neighbor cells. The neighbor lists for the remaining neighbor cells on the neighbor list of the serving cell have been omitted for clarity. In addition, it should be noted that for simplicity the cell identities Cident33-Cident95 are consecutive: clearly in practice this will not necessarily be the case.

Figure 7 is a flow chart illustrating a method in accordance with the third embodiment.

Firstly, starting at step 170, for an unknown neighbor (eg BCCH-BSIC1) in a measurement report relating to a MS in serving cell 50, the data analysis function module 402 establishes in step 175 the set of candidate cells for consideration as the unknown neighbor i.e. the cells having the same cell identity information BCCH-BSIC1 as the unknown neighbor. As indicated above, information on cell identities may generally be obtained from the OMC 35.

If only one candidate cell having the same cell identity information BCCH-BSIC1 is identified, step 180-n, it is trivial to establish the identity of the unknown neighbor, step 185. However, generally more than one candidate cell is identified, for example candidate cells Cident1 and Cident100, step 180-y.

Next the data analysis function module 402 obtains the identities of the cells reported in the measurement report, for example from the OMC 35 as indicated above, and a first neighbor cell e.g. neighbor Cident0 reported in the measurement report is selected, step 190. The data analysis function module 402 establishes whether any of the candidate cells e.g. Cident1 and Cident100 is in the neighbor list of the selected neighbor cell, step 195. As indicated above, the data analysis function module 402 may obtain neighbor list information from the OMC 35.

As explained above, neither candidate cell Cident1 or Cident100 is in the neighbor list of the selected measurement report neighbor cell Cident0. If the none of the candidate cells is in the neighbor list of the selected measurement report neighbor cell, step 145-n, the data analysis function module 402 checks, in step 200, whether all the measurement report neighbor cells have been processed, e.g. whether all candidate cells have been compared with the neighbor list of all known neighbor cells in the measurement report. If not, step 200-n, the next neighbor cell is selected, step 205, and the data analysis function module 402 establishes whether any of the candidate cells is in the neighbor list of the newly selected measurement report neighbor cell, step 195.

Thus, the next measurement report neighbor cell Cident2 is selected and the data analysis function module 402 determines whether either of the selected candidate cells Cident1 or Cident100 is in the neighbor list of the selected measurement report neighbor cell Cident2, step 195. In this case, it is determined that candidate cell Cident1 is in the neighbor list of cell Cident2.

If a candidate cell is in the neighbor list of the neighbor cell, step 195-y, as indicated above, the data analysis function module 402 notes the identified candidate cell e.g. Cident1 in step 210. Since more than one candidate cell may be identified in the neighbor lists of the neighbor cells identified in the measurement report, the data analysis function module 402 then checks, in step 200, whether all the measurement report neighbor cells have been processed. If not, step 200-n, the next neighbor cell is selected step 205. If all neighbor cells have been processed, step 200-y, the data analysis function module 402 establishes the probable identification of the unknown neighbor as the or one of the candidate cells identified in step 160.

If only one candidate cell has been identified, this candidate may be assumed to be the unknown neighbor.

Should more than one candidate cell be identified by the above method, the unknown neighbor must be resolved using additional information or techniques. Specifically, other factors which may be used to select a particular candidate cell are for example: if the serving cell and a candidate cell share the same location area code (LAC); if the serving cell and a candidate cell are under the same base station controller (BSS); if the serving cell and a candidate cell are located at the same site.

Additionally or alternatively, the third embodiment described above may be combined with one or more of the methods described herein in connection with the first, second and fourth embodiments.

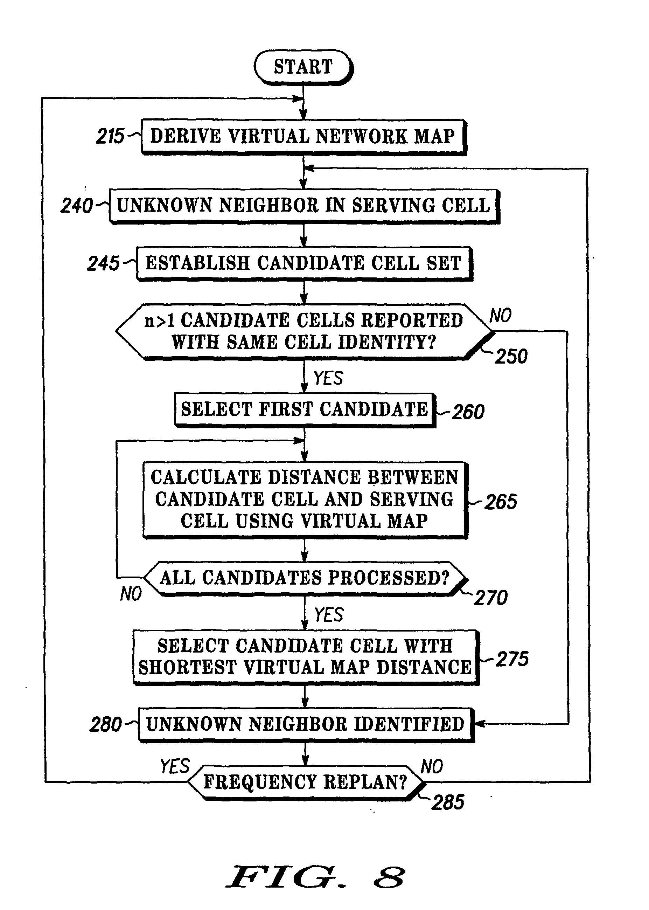

A method in accordance with a fourth embodiment will now be described with reference to Figures 8-10.

Where no geographic data is available a virtual network map may be drawn using a variant of a spring-layout algorithm in which the cells are represented as nodes and the neighbor relationships are treated as edges. In this known technique for drawing undirected graphs, connected cell nodes are attracted to one another corresponding to the neighbor relationships. The map can then be used to calculate the virtual distance between the serving cell and the candidate cells and the candidate cell with the shortest separation can be selected

Figure 8 is a flow chart showing a method in accordance with the fourth embodiment.

Firstly, starting at step 215, a virtual network graph corresponding to the current frequency plan is established. This may be achieved by using a spring-layout algorithm, as in the exemplary embodiment, or in any other way known to a skilled person.

One widely used example of a spring-layout algorithm is the Kamada-Kawai algorithm, an optimisation algorithm that attempts to minimise the energy function

$$E = \sum_{\forall l_{ij}} \left( \left| p_i - p_j \right| - l_{ij} \right)^2$$

where $l_{ij}$ is the desired distance between cells $i$ and $j$ and $p_i$ is the position of cell $i$ on the virtual network map. Therefore the energy function will be zero when each pair of cells are the desired distance away from each other. The desired distance reflects the fact that neighbours will be close to each other, therefore a value of $l_{ij}$ could be 1 for all neighbour relationships but otherwise can be regarded as irrelevant within the energy function, or instead of a flat value each $l_{ij}$ could be chosen to reflect the strength of the neighbouring relationship.

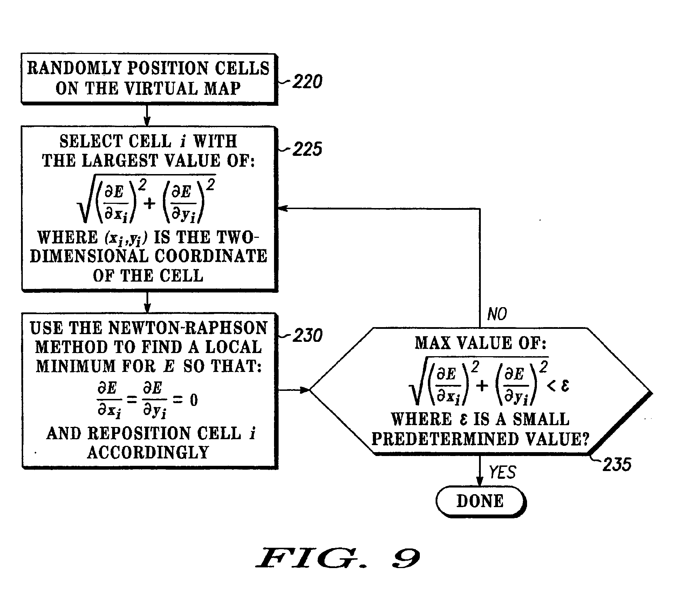

Figure 9 is a flowchart illustrating the Kamada-Kawai algorithm as an exemplary spring-layout algorithm.

Firstly, in step 220 the cells are randomly distributed on a virtual map. Next, in step 225, the cell with the largest value of function $\sqrt{\left( \dfrac{\partial E}{\partial x_i} \right)^2 + \left( \dfrac{\partial E}{\partial y_i} \right)^2}$ , where E is the energy function as defined above, is selected. Next, in step 230, the Newton-Raphson method is used to find a local minimum for E, and the cell is repositioned accordingly. Finally in step 235 it is determined whether $\sqrt{\left( \dfrac{\partial E}{\partial x_i} \right)^2 + \left( \dfrac{\partial E}{\partial y_i} \right)^2} < \varepsilon$ . If not, step 235-no, steps 225-235 are repeated. If so, step 235-yes, the virtual map is complete.

Other examples of spring-layout algorithms are well-documented and would also be suitable.

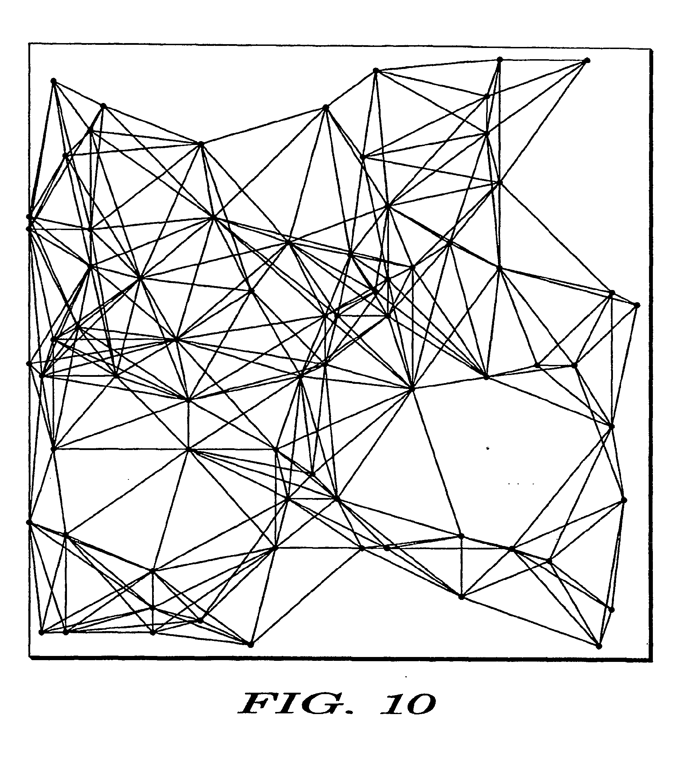

An exemplary virtual map is shown in Figure 10. The points on the virtual map represent cells and the lines between the points represent neighbor relationships.

Returning to Figure 8, once the virtual network map for the existing frequency plan has been derived, step 215, for an unknown neighbor (eg BCCH-BSIC1) in a measurement report relating to an MS in serving cell 50, step 240, the data analysis function module 402 establishes in step 245 the set of candidate cells for consideration as the unknown neighbor i.e. cells having the same cell identity BCCH-BSIC1 as the unknown neighbor, in this illustrative embodiment. As indicated above, information on cell identities may generally be obtained from the OMC 35.

If only one candidate cell having the same cell identity information BCCH-BSIC1 is identified, step 250-no, it is trivial to identify the unknown neighbor, step 255. However, generally more than one candidate cell is identified, for example candidate cell Cident1 and Cident100, step 250-yes.

Next, the data analysis function module 402 selects the first candidate cell e.g. Cidenf1, step 260, and calculates the distance between the candidate cell Cident1 and the serving cell, step 265, using the virtual network map established in step 215. This may be achieved very simply from the equation $d^2=(x_s-x_c)^2 + (y_s-y_c)^2$, where d is the distance between the serving cell and the candidate cell, $x_s$ and $y_s$ are the coordinates of the serving cell and $x_c$ and $y_c$ are the coordinates of the candidate cell, or any other way as may be available to a skilled person.

If not all the candidate cells have been processed, step 270-n, step 265 is repeated. Once all candidate cells have been processed step 270-yes, the candidate cell with the shortest virtual map distance is selected, step 275, thus identifying the unknown neighbour, step 280.

If a frequency re-plan is carried out, step 285-yes, the virtual network map must be re-calculated, step 215. Otherwise, step 285-no, the process is repeated to identify the next unknown neighbor, step 240 onwards.

As indicated previously, additionally or alternatively, the method described above in relation to the fourth embodiment may be combined with one or more of the methods described herein in connection with the first second and third embodiments.

It should be noted that the methods described above in accordance with the first to fourth embodiments may be used in the alternative and in addition to each other to enable accurate resolution of unknown neighbors.

Thus the invention provides a new method of resolving unknown neighbor identities in measurement report data. In particular, the method in accordance with the invention may be carried out automatically to identify unknown neighbor identities in measurement report data, to facilitate automated frequency re-planning of a cellular communication network. The resolution of unknown neighbors in this way enables more accurate frequency planning to be achieved, leading to a greater capacity from the level same network infrastructure, and improved interference performance.

**Claims**

1. A method of determining the identity of an unknown neighbor cell (55, 60) of a serving cell (50) in a cellular communication system, the unknown neighbor cell (55, 60) being identified from measurement report information supplied by a communication device associated with the serving cell (50), **characterized by** using neighbor list information of at least one candidate cell of the cellular communication network; and determining (90) whether the serving cell appears in the neighbor list of the or each candidate neighbor cell.

2. The method as claimed in claim 1 comprising the step of identifying at least one candidate neighbor cell from measurement report information.

3. The method as claimed in claim 1 or claim 2 wherein the likelihood that a candidate neighbor cell is the unknown neighbor cell is increased when the serving cell appears in the neighbor list of the candidate neighbor cell.

4. The method as claimed in any preceding claim further comprising the steps of:

   identifying known neighbor cells from measurement report information; and determining the identity of the unknown neighbor cell from the neighbor lists of the known neighbor cells.

5. The method as claimed in claim 4 wherein if the identity of the unknown neighbor cell cannot be determined from the neighbor lists of the known neighbor cells, the method further comprises the step of determining the identity of the unknown neighbor cell from the neighbor lists of adjacent cells on the neighbor list of the known neighbor cells.

6. The method as claimed in any preceding claim, further comprising the step of determining the identity of the unknown neighbor cell from the neighbor list of cells on the neighbor list of the serving cell.

7. The method as claimed in claim 5 or claim 6, wherein the step of determining the identity of the unknown neighbor cell from the neighbor list of adjacent cells is repeated until the identity of the unknown neighbor cell is determined.

8. The method as claimed in any preceding claim wherein the measurement report information contains frequency channel information and base station identification information.

9. The method as claimed in any preceding claim comprising the steps of:

   generating a virtual network map of at least part of the network using neighbor list information of cells of the network; determining the identity of the unknown neighbor from the virtual network map.

10. The method as claimed in claim 9 wherein the unknown neighbor cell is determined to be a candidate cell closest to the serving cell in the virtual network map.

11. The method as claimed in claim 9 or 10 wherein the virtual network map is generated using a spring-layout algorithm.

12. The method as claimed in any preceding claim, wherein supplementary information comprising one or more of radio frequency propagation determinations; physical proximity determinations; Location Area Code determinations; adjacent or identical base station determinations; adjacent or same site determinations; may also be used to determine the identity of an unknown neighbor cell of a serving cell in a cellular communication network

13. A storage medium storing processor-implementable instructions for controlling a processor to carry out the method of any preceding claim

14. Apparatus for determining an unknown neighbor cell (55,60) in a cellular communication system, comprising means for establishing information relating to the unknown neighbor cell (55, 60) from measurement report information supplied by a communication device associated with the serving cell (50); **characterized by** means for establishing the identity of the unknown neighbor (55, 60) using neighbor list information of at least one candidate cell of the cellular communication network; and

means for determining (90) whether the serving cell appears in the neighbor list of the or each candidate neighbor cell.

**Patentansprüche**

1. Verfahren zum Bestimmen der Identität einer unbekannten Nachbarzelle (55, 60) von einer bedienenden Zelle (50) in einem zellularen Kommunikationssystem, wobei die unbekannte Nachbarzelle (55, 60) aus Messreportinformation identifiziert wird, die durch ein Kommunikationsgerät bereitgestellt wird, das mit der bedienenden Zelle (50) verbunden ist, **dadurch gekennzeichnet, dass** Nachbarlisteninformation von mindestens einer Kandidatenzelle des zellularen Kommunikationsnetzwerks verwendet wird; und bestimmt wird (90), ob die bedienende Zelle in der Nachbarliste von der oder jeder Kandidatennachbarzelle erscheint.

2. Verfahren gemäß Anspruch 1, das den Schritt des Identifizierens von mindestens einer Kandidatennachbarzelle aus Messreportinformation umfasst.

3. Verfahren gemäß Anspruch 1 oder Anspruch 2, wobei die Wahrscheinlichkeit, dass eine Kandidatennachbarzelle die unbekannte Nachbarzelle ist, erhöht wird, wenn die bedienende zelle in der Nachbarliste der Kandidatennachbarzelle erscheint.

4. Verfahren gemäß einem der vorangegangenen Ansprüche, das weiterhin die Schritte umfasst:

   Identifizieren bekannter Nachbarzellen aus Messreportinformation; und Bestimmen der Identität der unbekannten Nachbarzelle aus den Nachbarlisten der bekannten Nachbarzellen.

5. Verfahren gemäß Anspruch 4, wobei die Identität der unbekannten Nachbarzelle nicht aus den Nachbarlisten der bekannten Nachbarzellen bestimmt werden kann, wobei das Verfahren weiterhin den Schritt des Bestimmens der Identität der unbekannten Nachbarzelle aus den Nachbarlisten von benachbarten Zellen auf der Nachbarliste der bekannten Nachbarzellen umfasst.

6. Verfahren gemäß einem der vorangehenden Ansprüche, das weiterhin den Schritt des Bestimmens der Identität der unbekannten Nachbarzelle aus der Nachbarliste von Zellen auf der Nachbarliste der bedienenden Zelle umfasst.

7. Verfahren gemäß Anspruch 5 oder Anspruch 6, wobei der Schritt des Bestimmens der Identität der unbekannten Nachbarzelle aus der Nachbarliste von benachbarten Zellen wiederholt wird, bis die Identität der unbekannten Nachbarzelle bestimmt ist.

8. Verfahren gemäß einem der vorangehenden Ansprüche, wobei die Messreportinformation Frequenzkanalinformation und Basisstationsidentifizierungsinformationen enthält.

9. Verfahren gemäß einem der vorangehenden Ansprüche, das die Schritte umfasst:

   Erzeugen einer virtuellen Netzwerk-Karte von mindestens einem Teil des Netzwerks unter Verwendung von Nachbarlisteninformation von Zellen des Netzwerks; Bestimmen der Identität des unbekannten Nachbarn aus der virtuellen Netzwerk-Karte.

10. verfahren gemäß Anspruch 9, wobei für die unbekannte Nachbarzelle bestimmt wird, eine Kandidatenzelle zu sein, die der bedienenden Zelle in der virtuellen Netzwerk-Karte am nächsten liegt.

11. Verfahren gemäß Anspruch 9 oder 10, wobei die virtuelle Netzwerk-Karte unter Verwendung eines Spring-Layout-Algorithmus erzeugt wird.

12. Verfahren gemäß einem der vorangehenden Ansprüche, wobei ergänzende Information einschließlich einer oder mehrerer Funkfrequenzausbreitungsbestimmungen; physikalischer Umgebungsbestimmungen; Location-Area-Code Bestimmungen; benachbarte oder identische Basisstationsbestimmungen; benachbarte oder gleiche Ortsbestimmungen; ebenfalls verwendet werden können, um die Identität einer unbekannten Nachbarzelle einer bedienenden Zelle in einem zellularen Kommunikationsnetzwerks zu bestimmen.

13. Speichermedium, das prozessor-implementierbare Instruktionen speichert, um einen Prozessor zur Ausführung des Verfahrens nach einem vorangehenden Anspruch zu steuern.

14. Vorrichtung zum Bestimmen einer unbekannten Nachbarzelle (55, 60) in einem zellularen Kommunikationssystem, umfassend:

   Mittel zum Ermitteln von Information betreffend die unbekannte Nachbarzelle (55, 60), aus Messreportinformation, die durch ein Kommunikationsgerät zugeführt wird, das mit der bedienenden Zelle (50) in Verbindung steht; **gekennzeichnet durch** Mittel zum Ermitteln der Identität des unbekannten Nachbarn (55, 60) unter Verwendung von Nachbarlisteninformation von mindestens einer Kandidatenzelle des zellularen Kommunikationsnetzwerks; und

Mittel zum Bestimmen (90), ob die bedienende Zelle in der Nachbarliste von der oder jeder Kandidatennachbarzelle erscheint.

**Revendications**

1. Procédé de détermination de l'identité d'une cellule voisine inconnue (55, 60) d'une cellule de desserte (50) dans un système de communication cellulaire, la cellule voisine inconnue (55, 60) étant identifiée à partir d'informations de rapports de mesures fournies par un dispositif de communication associé à la cellule de desserte (50), **caractérisé par** les étapes qui consistent à :

   utiliser des informations de liste de voisinage d'au moins une cellule candidate du réseau de communication cellulaire ; et
   déterminer (90) si la cellule de desserte apparaît dans la liste de voisinage de la ou de chaque cellule voisine candidate.

2. Procédé selon la revendication 1, comprenant l'étape qui consiste à identifier au moins une cellule voisine candidate à partir des informations de rapports de mesures.

3. Procédé selon la revendication 1 ou la revendication 2, dans lequel la probabilité qu'une cellule voisine candidate soit la cellule voisine inconnue augmente lorsque la cellule de desserte apparaît dans la liste de voisinage de la cellule voisine candidate.

4. Procédé selon l'une quelconque des revendications précédentes, comprenant, en outre, les étapes qui consistent à :

   identifier des cellules voisines connues à partir d'informations de rapports de mesures ; et
   déterminer l'identité de la cellule voisine inconnue à partir des listes de voisinage des cellules voisines connues.

5. Procédé selon la revendication 4, dans lequel, si l'identité de la cellule voisine inconnue ne peut pas être déterminé à partir des listes de voisinage des cellules voisines connues, le procédé comprend, en outre, l'étape qui consiste à déterminer l'identité de la cellule voisine inconnue à partir des listes de voisinage de cellules adjacentes présentes sur la liste de voisinage des cellules voisines connues.

6. Procédé selon l'une quelconque des revendications précédentes, comprenant, en outre, l'étape qui consiste à déterminer l'identité de la cellule voisine inconnue à partir de la liste de voisinage des cellules présentes sur la liste de voisinage de la cellule de desserte.

7. Procède selon la revendication 5 ou la revendication 6, dans lequel l'étape de détermination de l'identité de la cellule voisine inconnue à partir des listes de voisinage de cellules adjacentes est répétée jusqu'à ce que l'identité de la cellule voisine inconnue soit déterminée.

8. Procédé selon l'une quelconque des revendications précédentes, dans lequel les informations de rapports de mesures contiennent des informations sur le canal de fréquence et des informations d'identification de la station de base.

9. Procédé selon l'une quelconque des revendications précédentes, comprenant les étapes qui consistent à :

   générer une topographie de réseau virtuelle d'au moins une partie du réseau à l'aide des informations des listes de voisinage de cellules du réseau ;
   déterminer l'identité de la cellule voisine inconnue à partir de la topographie de réseau virtuelle.

10. Procédé selon la revendication 9, dans lequel la cellule voisine inconnue est déterminée comme étant la cellule candidate la plus proche de la cellule de desserte sur la topographie de réseau virtuelle.

11. Procédé selon la revendication 9 ou 10, dans lequel la topographie de réseau virtuelle est générée à l'aide d'un algorithme de topologie à ressorts.

12. Procédé selon l'une quelconque des revendications précédentes, dans lequel des informations supplémentaires comprenant une ou plusieurs déterminations de propagation de la fréquence radioélectrique ; des déterminations de proximité physique ; des détermination de Code de Zone Locale ; des déterminations de stations de base adjacentes ou identiques ; des détermination de sites adjacents ou identiques ; peuvent également être utilisées pour déterminer l'identité d'une cellule voisine inconnue d'une cellule de desserte dans un réseau de communication cellulaire.

13. Support de stockage stockant des instructions pouvant être implémentées par processeur, servant à commander un processeur de façon qu'il exécute le procédé selon l'une quelconque des revendications précédentes.

**14.** Appareil pour déterminer une cellule voisine inconnue (55, 60) dans un système de communication cellulaire, comprenant :

des moyens pour établir des informations associées à la cellule voisine inconnue (55, 60) à partir d'informations de rapports de mesures fournies par un dispositif de communication associé à la cellule de desserte (50), **caractérisé par** :

des moyens pour établir l'identité de la cellule voisine inconnue (55, 60) à l'aide d'informations de listes de voisinage d'au moins une cellule candidate du réseau de communication cellulaire ; et
des moyens pour déterminer (90) si la cellule de desserte apparaît dans la liste de voisinage de la ou de chaque cellule voisine candidate.

FIG. 1

FIG. 2

*FIG. 3*

NEIGHBOR LIST FOR SERVING CELL

| CIDENT 0 |
|----------|
| CIDENT 2 |
| CIDENT 3 |

⋮

| CIDENT 32 |

NEIGHBOR LIST FOR NEIGHBOR CIDENT 0

| CIDENT 33 |
|-----------|
| CIDENT 34 |
| CIDENT 35 |

⋮

| CIDENT 64 |

NEIGHBOR LIST FOR NEIGHBOR CIDENT 2

| CIDENT 1 |
|----------|
| CIDENT 65 |
| CIDENT 66 |

⋮

| CIDENT 95 | · · ·

· · ·

**FIG. 4**

120 — UNKNOWN NEIGHBOR IN SERVING CELL

125 — ESTABLISH CANDIDATE CELL SET

130 — n>1 CANDIDATE CELLS REPORTED WITH SAME CELL IDENTITY? — NO

YES

140 — SELECT NEIGHBOR CELL FROM SERVING CELL NEIGHBOR LIST

155 — SELECT NEXT NEIGHBOR CELL

NO

150 — ALL NEIGHBOR CELLS PROCESSED? — YES

145 — IS ANY CANDIDATE CELL IN NEIGHBOR LIST OF NEIGHBOR CELL? — NO

YES

160 — NOTE CANDIDATE

PROBABLE ID OF UNKNOWN NEIGHBOR

135

**FIG. 5**

|                                      | NEIGHBOR LIST FOR NEIGHBOR CIDENT 0 | NEIGHBOR LIST FOR NEIGHBOR CIDENT 2 |
| --- | --- | --- |
| **SERVING CELL MEASUREMENT REPORT** | | |
| BCCH-BSIC 0 | CIDENT 33 | CIDENT 1 |
| BCCH-BSIC 2 | CIDENT 34 | CIDENT 65 · · · |
| BCCH-BSIC 4 | CIDENT 35 | CIDENT 66 |
| BCCH-BSIC 3 | | |
| BCCH-BSIC 5 | ⋮ | ⋮ |
| BCCH-BSIC 1 | CIDENT 64 | CIDENT 95 · · · |

*FIG. 6*

170 — UNKNOWN NEIGHBOR IN SERVING CELL

175 — ESTABLISH CANDIDATE CELL SET

180 — n>1 CANDIDATE CELLS REPORTED WITH SAME CELL IDENTITY? — NO

YES

190 — SELECT NEIGHBOR CELL FROM MEASUREMENT REPORT

205 — SELECT NEXT NEIGHBOR CELL

195 — IS ANY CANDIDATE CELL IN NEIGHBOR LIST OF NEIGHBOR CELL? — YES / NO

210 — NOTE CANDIDATE

200 — ALL MEASUREMENT REPORT NEIGHBORS PROCESSED? — NO

YES

185 — PROBABLE ID OF UNKNOWN NEIGHBOR

*FIG. 7*

*215* — DERIVE VIRTUAL NETWORK MAP

*240* — UNKNOWN NEIGHBOR IN SERVING CELL

*245* — ESTABLISH CANDIDATE CELL SET

n>1 CANDIDATE CELLS REPORTED WITH SAME CELL IDENTITY? *250*    NO

YES

SELECT FIRST CANDIDATE *260*

CALCULATE DISTANCE BETWEEN CANDIDATE CELL AND SERVING CELL USING VIRTUAL MAP *265*

ALL CANDIDATES PROCESSED? *270*    NO

YES

SELECT CANDIDATE CELL WITH SHORTEST VIRTUAL MAP DISTANCE *275*

*280* — UNKNOWN NEIGHBOR IDENTIFIED

YES    FREQUENCY REPLAN?    NO    *285*

## FIG. 8

RANDOMLY POSITION CELLS ON THE VIRTUAL MAP $\sim$ *220*

SELECT CELL $i$ WITH THE LARGEST VALUE OF: $\sim$ *225*

$$\sqrt{\left(\frac{\partial E}{\partial x_i}\right)^2 + \left(\frac{\partial E}{\partial y_i}\right)^2}$$

WHERE $(x_i, y_i)$ IS THE TWO-DIMENSIONAL COORDINATE OF THE CELL

USE THE NEWTON-RAPHSON METHOD TO FIND A LOCAL MINIMUM FOR $E$ SO THAT: $\sim$ *230*

$$\frac{\partial E}{\partial x_i} = \frac{\partial E}{\partial y_i} = 0$$

AND REPOSITION CELL $i$ ACCORDINGLY

*NO*

MAX VALUE OF:

$$\sqrt{\left(\frac{\partial E}{\partial x_i}\right)^2 + \left(\frac{\partial E}{\partial y_i}\right)^2} < \varepsilon$$

WHERE $\varepsilon$ IS A SMALL PREDETERMINED VALUE? $\sim$ *235*

*YES*

DONE

*FIG. 9*

FIG. 10